# EUROPÄISCHE PATENTSCHRIFT

(11) **EP 2 484 254 B1**
(45) Veröffentlichungstag und Bekanntmachung des Hinweises auf die Patenterteilung: **02.08.2017**
(21) Anmeldenummer: 12153950.6
(22) Anmeldetag: 03.02.2012
(51) Int. Cl.: A47J 43/24

(54) **Vorrichtung zur Verarbeitung von Lebensmitteln mit einer Bremsvorrichtung**
Device for processing food with a braking device
Dispositif de traitement d'aliments doté d'un dispositif de freinage

(30) Priorität: 08.02.2011 DE 102011000555
(43) Veröffentlichungstag der Anmeldung: 08.08.2012
(73) Patentinhaber: Leifheit AG, 56377 Nassau (DE)
(72) Erfinder: Fischer, Klaus-Jürgen, 56379 Holzappel (DE); Kürschner, Jochen, 97877 Wertheim (DE); Brand, Dieter, 56132 Dausenau (DE)
(74) Vertreter: Tersteegen, Felix

(56) Entgegenhaltungen:
- EP-A2- 0 529 287
- WO-A1-2006/101796
- DE-A1- 2 250 177
- DE-A1- 3 117 773
- DE-T2- 69 502 291
- US-A1- 2010 263 555

## Beschreibung

Die Erfindung betrifft eine Vorrichtung zur Verarbeitung von Lebensmitteln mit einem um eine Drehachse drehbar gelagerten Funktionseinsatz, der bei bestimmungsgemäßen Gebrauch von einer Antriebseinrichtung angetrieben ist, um innerhalb eines von einer Abdeckung zumindest teilweise verdeckten Arbeitsraums zu rotieren, wobei eine Bremseinrichtung vorgesehen ist, durch deren Betätigung eine erste Reibfläche gegen eine zweite Reibfläche angestellt wird, um den Funktionseinsatz im Anschluss an einen Arbeitsgang abzubremsen.

Die Erfindung betrifft insbesondere eine Schleudervorrichtung, beispielsweise eine Salatschleuder, bei der der Funktionseinsatz einen innerhalb einer Schüssel aufgenommenen Schleuderkorb umfasst, oder eine Verkleinerungsvorrichtung für Lebensmittel nach Art eines Food-Processors, bei dem ein zum Beispiel mit Messern oder anderen Aufsätzen bestücktes Werkzeug innerhalb einer Schüssel als Funktionseinsatz rotiert, um Lebensmittel zu zerkleinern, zu walken, zu mischen oder anderweitig zu bearbeiten.

Bei solchen Vorrichtungen können Bremseinrichtungen vorgesehen werden, die dafür Sorge tragen, dass der rotierende Funktionseinsatz im Anschluss an einen Arbeitsgang, also insbesondere im Anschluss an das Trockenschleudern oder an einen Zerkleinerungs- oder Walkvorgang, zügig verzögert, um ein zeitnahes Öffnen des Arbeitsraums bei bereits stehendem Funktionseinsatz zu ermöglichen. Dies minimiert die Gefahr, dass Lebensmittel ungewollt herausgeschleudert werden und dass der Nutzer sich bei offen gelegtem Arbeitsraum an dem noch rotierenden Funktionseinsatz verletzt. Vorrichtungen dieser Art sind dem Fachmann bekannt. So offenbart beispielsweise die Offenlegungsschrift WO 2006/101796 A1 eine Salatschleuder mit einer Bremseinrichtung. Die Bremseinrichtung weist eine nach Art eines Druckknopfs in die äußere Arbeitsraumabdeckung außermittig eingelassene, elastische Einlage auf, deren Niederdrücken einen Bremsbelag punktuell gegen einen oberseitig an einem inneren Deckel angeordneten Bremsring zur Erzeugung der Bremskraft anzustellen vermag. Eine solche Ausgestaltung hat jedoch eine Reihe von Nachteilen. Zum einen verursacht die außermittig wirkende Betätigungskraft ein auf den Schleuderkorb wirkendes Kippmoment, welches durch eine ausreichend stabile Konstruktion der Gesamtvorrichtung aufgefangen werden muss. Zum anderen bedarf es eines außermittig auf dem Schleuderkorb angeordneten Trägers für den Bremsring, der im Beispiel der WO 2006/101796 A1 von einem inneren Deckel gebildet ist. Insgesamt erfordert diese Art der Konstruktion eine Vielzahl von Bauteilen und eine verhältnismäßig aufwändige Konstruktion, die zudem auch die Komplexität und Anzahl der zur Herstellung benötigten Werkzeuge erhöht. Nicht zuletzt hat die aus der WO 2006/101796 A1 bekannte, konstruktive Lösung eine Vielzahl von Spalten und Hinterschnitten an den einzelnen Bauteilen der Bremseinrichtung zur Folge, in die sich dauerhaft Lebensmittelreste setzen können und die für eine Reinigung schwer zugänglich sind.

Eine ähnliche Vorrichtung offenbart die Druckschrift US 2010/0263555 A1. Hierbei ist zum Abbremsen des Funktionseinsatzes ein von der Abdeckung gebildeter exzentrisch zur Drehachse liegender Bereich der Abdeckung niederzudrücken.

Aus den Druckschriften EP 0 529 287 A2, DE 31 17 773 A1, DE 2 250 177 und DE 695 02 291 T2 sind gattungsgemäße Vorrichtungen zur Verarbeitung von Lebensmitteln bekannt, die über Bremseinrichtungen zur Verhinderung des Nachlaufens von Funktionseinsätzen verfügen. All diesen Konstruktionen ist gemein, dass das Aufsetzen einer Antriebseinrichtung auf die Vorrichtung eine ansonsten packende Bremse löst bzw. dass das Abnehmen einer Antriebsvorrichtung eine Bremswirkung hervorruft.

Aufgabe der Erfindung ist es, eine Vorrichtung der eingangs genannten Art zur Verfügung zu stellen, deren Konzeption einen vereinfachten konstruktiven Aufbau sowohl der Vorrichtung selbst als auch der zu deren Herstellung benötigten Werkzeuge ermöglicht. Weiter ist Aufgabe der Erfindung eine Vorrichtung der eingangs genannten Art zu schaffen, die insbesondere im Hinblick auf die Bremseinrichtung mit wenigen Bauteilen auskommt und somit zu deren Herstellung nur wenige Werkzeuge erfordert. Die Vorrichtung soll außerdem leicht zu bedienen und zu reinigen sein.

Diese Aufgaben werden unter anderem dadurch gelöst, dass die Betätigung der Bremseinrichtung durch eine Verlagerung oder Deformation der Abdeckung und/oder durch eine Verlagerung der Antriebseinheit relativ zum Funktionseinsatz infolge des Niederdrückens der Antriebseinheit oder infolge eines gezielten Verkippens der Antriebseinheit gegenüber der Abdeckung erfolgt.

Mit einer Verlagerung ist dabei unter anderem die Absenkung der Abdeckung relativ zum Funktionseinsatz gemeint, die zum Beispiel dadurch erreicht werden kann, dass die Abdeckung mittels eines deformierbaren Auflagers auf einem den Arbeitsraum bildenden Behältnis, insbesondere einer Schüssel, aufsitzt. Bevorzugt wird die Absenkung der Abdeckung jedoch dadurch erreicht, dass die der Abdeckung eigene und ihr innewohnende Materialelastizität dazu ausgenutzt wird, die Abdeckung zumindest abschnittsweise, bevorzugtjedoch im Ganzen, durch gezieltes Aufbringen einer Bremsenbetätigungskraft derart zu deformieren, dass sich die beiden Reibflächen einander annähern und schließlich berühren.

In beiden vorgenannten Fällen wird auf die Abdeckung eine Bremsenbetätigungskraft ausgeübt. Insbesondere für den Fall, dass die Bremsenbetätigungskraft zu der zum Antrieb des Funktionseinsatzes erforderlichen Antriebsbetätigungskraft gleichgerichtet ist, ist die Vorrichtung derart ausgelegt, dass die Bremsenbetätigungskraft spürbar größer als die Antriebsbetätigungskraft ist. So ist sichergestellt, dass die vom Nutzer auf die Antriebseinrichtung ausgeübte Kraft nicht zu einem ungewollten Abbremsen der Funktionseinheit führt. Diese Ausgestaltung ist insbesondere dann sinnvoll, wenn die Bremseinrichtung durch Niederdrücken der Antriebseinrichtung betätigt werden soll.

Bei den genannten Ausführungsformen wird also insbesondere keine in die Abdeckung eingelassene, gesonderte Betätigungseinrichtung zur Erzeugung einer Bremskraft genutzt, beispielsweise ein gesonderter Betätigungsknopf aus Weichkunststoff, sondern die Abdeckung selbst wird durch das aktive Ausüben einer Bremsenbetätigungskraft deformiert und somit zumindest abschnittsweise, bevorzugt im Ganzen, deformiert und abgesenkt, um die Reibflächen gegeneinander anzustellen.

Es kann vorgesehen sein, dass die erste Reibfläche an der dem Arbeitsraum zugewandten Innenseite der Abdeckung oder der dem Arbeitsraum zugewandten Innenseite der auf die Abdeckung bestimmungsgemäß aufgesetzten Antriebsvorrichtung angeordnet ist, während die zweite Reibfläche an einer zentral angeordneten Stirnseite des Funktionseinsatzes angeordnet ist, und wobei die erste Reibfläche und die zweite Reibfläche von der Drehachse durchdrungen sind oder die Drehachse unmittelbar umgeben und sich bei bestimmungsgemäßem Gebrauch unmittelbar gegenüberliegen.

Zum einen ermöglicht es diese Ausgestaltung, die bereits beschriebene Ausgestaltung, bei der die Betätigung der Bremseinrichtung durch eine Verlagerung der Abdeckung und/oder der Antriebseinheit relativ zum Funktionseinsatz erfolgt, konstruktiv besonders einfach umzusetzen. Zum anderen stellen die sich unmittelbar gegenüberliegenden, zentral angeordneten Reibflächen eine konstruktiv einfache und leicht zu reinigende Lösung ohne nennenswerte Zusatzbauteile dar. Zur Betätigung der Bremseinrichtung bedarf es keiner zusätzlichen Betätigungseinrichtung. Außerdem kommt es bei Betätigung der Bremsvorrichtung nicht zu einer außermittigen Belastung der Gesamtvorrichtung.

Bevorzugt ist der Funktionseinsatz von einem Schleuderkorb gebildet, der einen um die Drehachse herum angeordneten Dom aufweist, der an seiner der Abdeckung zugewandten Stirnseite die zweite Reibfläche aufweist. Der Dom ist im Gebrauch zentral um die Drehachse angelegt und dient neben seiner Funktion als Träger der zweiten Reibfläche auch als Antriebswelle für den Schleuderkorb.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
- Fig. 1: eine Salatschleuder in einer perspektivischen Gesamtansicht,
- Fig. 2: einen Schnitt durch die Salatschleuder aus Figur 1, und
- Fig. 3: die Einzelheit A aus Figur 2 in einer vergrößerten Darstellung.

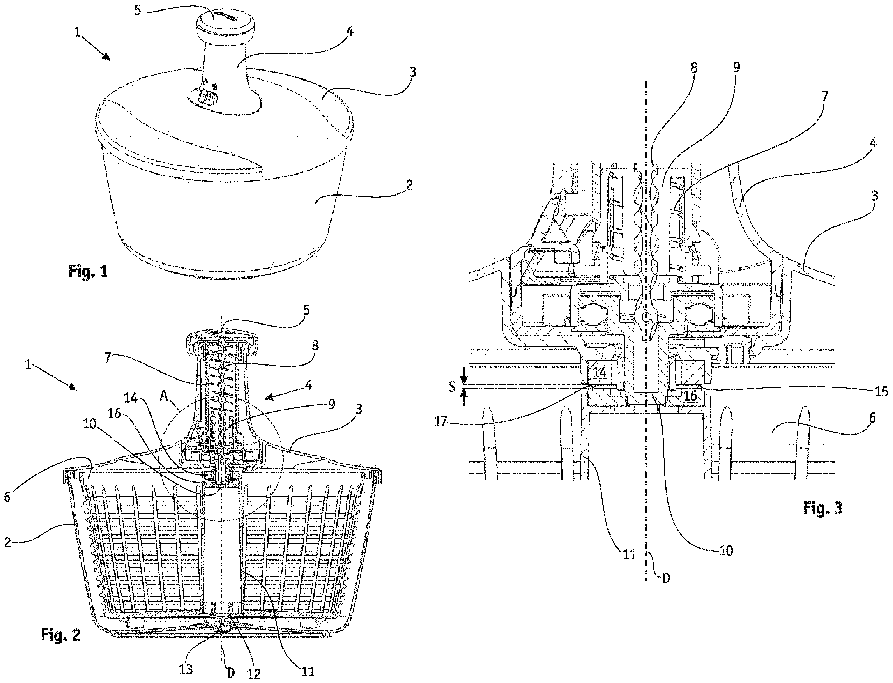

In Figur 1 ist eine Salatschleuder 1 in einer perspektivischen Gesamtansicht gezeigt. Auf einer äußeren Schüssel 2, die einen innerhalb der Schüssel 2 liegenden Arbeitsraum nach außen begrenzt, ist eine Abdeckung in Form eines Deckels 3 vorgesehen. Auf dem Deckel 3 ist eine Antriebseinrichtung angeordnet, die in den Figuren beispielhaft von einem auf die Abdeckung bzw. den Deckel 3 aufsetzbaren und abnehmbaren Antriebsaufsatz 4 gebildet ist, der einen über einen Antriebsstempel 5 angetriebenen Spindelantrieb aufweist. Die Antriebseinrichtung 4 kann aber auch durch einen auf bzw. innerhalb der Abdeckung angeordneten Hebelmechanismus, einen Seilzugmechanisums oder einen anderen Antriebsmechanismus gebildet sein.

Figur 2 zeigt die Salatschleuder aus Figur 1 im Schnitt. Der Antriebsstempel 5 wird zum Antreiben eines innerhalb der Schüssel 2 angeordneten Schleuderkorbs 6 aus der in Figur 2 gezeigten unteren Position mittels einer Feder 7 selbsttätig in eine obere Position (in den Figuren nicht gezeigt) gedrängt. Beim Niederdrücken des Antriebsstempels 5 zurück in die untere Position treibt eine Spindel 9 den Schleuderkorb 6 über eine mit dem Schleuderkorb 6 drehfest verbundene Spindelmutter 8 an. Zur drehfesten Verbindung des Antriebsaufsatzes 4 mit dem Schleuderkorb 6 ist in der Abdeckung bzw. dem Deckel 3 eine Öffnung vorgesehen, durch die ein Antriebswellenstumpf 10, der wiederum drehfest mit einem Dom 11 im Zentrum des Schleuderkorbs 6 in Eingriff steht, hindurchragt. Für die durch die Feder 7 unterstützte Aufwärtsbewegung des Antriebsstempels 5 ist ein Freigang vorgesehen, so dass der Schleuderkorb 6 relativ zum Antriebsaufsatz 4 in einer Relativdrehrichtung frei rotieren und in der anderen Relativdrehrichtung von dem Antriebswellenstumpf 10 angetrieben werden kann.

Die über den Antriebswellenstumpf 10 auf den Schleuderkorb 6 übertragene Antriebsleistung wird von einem sich im Zentrum des Schleuderkorbs 6 um die Drehachse D herum erhebenden Dom 11 in den Schleuderkorb 6 eingeführt. Der Dom 11 ist bevorzugt werkstoffeinstückig mit dem Schleuderkorb 6 ausgebildet, kann aber auch als separates Bauteil drehfest auf den Schleuderkorb 6 aufgesteckt sein. Am unteren Ende ist der in den Figuren beispielhaft hohl ausgebildete Dom 11 durch eine Verschlusskappe 12 verschlossen, die außerdem einen Rotationsdorn 13 ausbildet, der in einer korrespondierenden Aufnahme auf der Unterseite der Schüssel 3 aufliegt. An der gegenüberliegenden, dem Deckel 3 zugewandten Stirnseite des Doms 11 greift der Antriebswellenstumpf 10 formschlüssig in den Dom 11 ein.

Wie in Figur 2 und noch besser in Figur 3, in der Einzelheit A aus Figur 2 vergrößert dargestellt ist, zu erkennen ist, befindet sich an der Unterseite der Abdeckung bzw. des Deckels 3 ein erster Bremsring 14, der eine dem Dom 11 zugewandte erste Reibfläche 15 ausbildet. An der der Abdeckung bzw. dem Deckel 3 zugewandten Stirnseite des Doms 11 wiederum ist ein eine zweite Reibfläche 17 ausbildender zweiter Bremsring 16 vorgesehen. Die beiden Reibflächen 15, 17 liegen sich unmittelbar gegenüber und sind während eines Arbeitsgangs um die Spaltbreite S voneinander beabstandet.

Wird nun durch Druck auf den Antriebsstempel 5 der Funktionseinsatz - in den Figuren also der Schleuderkorb 6 - um die Drehachse D in Drehung versetzt, rotiert der Funktionseinsatz frei und reibungsarm innerhalb des von der Schüssel 2 und dem Deckel 3 abgeschlossenen Arbeitsraums. Durch den Antriebswellenstumpf 10 und den Rotationsdorn 13 wird der Funktionseinsatz stabil in Position gehalten. Die Gesamtvorrichtung, insbesondere der Verformungswiderstand der Abdeckung bzw. des Deckels 3, ist derart konzipiert, dass eine normale, zu erwartende Antriebsbetätigungskraft, die vom Nutzer auf den Antriebsstempel 5 auszuüben ist, um den Funktionseinsatz anzutreiben, nicht ausreicht, die Spaltbreite S auf Null zu verringern bzw. die erste und zweite Reibfläche 15,17 gegeneinander anzustellen. Dies bedeutet, dass bei normaler Betätigung der Antriebseinrichtung der Funktionseinsatz von den Reibflächen unbeeinflusst rotieren kann.

Gleichwohl ist die Gesamtvorrichtung, insbesondere der Verformungswiderstand der Abdeckung bzw. des Deckels 3 gegen ein Niederdrücken des Antriebsstempels 5, derart konzipiert, dass ein gezieltes, verstärktes Niederdrücken der Antriebseinrichtung bzw. des Antriebsstempels 5, also ein Niederdrücken mit einer über die Antriebsbetätigungskraft hinausgehenden Bremsenbetätigungskraft, die Spaltbreite S auf Null zu reduzieren und die erste und zweite Reibfläche 15,17 gegeneinander anzustellen vermag. Somit kann der Nutzer im Anschluss an einen Arbeitsgang durch Aufbringen der Bremsenbetätigungskraft den Funktionseinsatz gezielt abbremsen, um die Abdeckung zeitnah nach Abschluss des Arbeitsgangs bei stehendem Funktionseinsatz öffnen zu können.

Ist anstelle des in den Figuren gezeigten Spindel-Antriebsaufsatzes 4 ein andersartiger Antrieb vorgesehen, so ist die Erfindung gleichwohl auch dann einsetzbar. Wird beispielsweise ein Seilzug, ein Kurbelantrieb, ein Hebelantrieb oder ein sonstiger Antrieb eingesetzt, so kann die Bremswirkung ebenfalls durch Niederdrücken der Abdeckung erzielt werden. Der Verformungswiderstand der Abdeckung kann in diesen Fällen in aller Regel geringer ausgelegt werden, da Antriebsbetätigungskraft und Bremsenbetätigungskraft entweder nicht gleichgerichtet sind und/oder auf unterschiedliche Bereiche der Abdeckung wirken.

In den Figuren ist die erste Reibfläche 15 durch einen unmittelbar an der Abdeckung befestigten ersten Bremsring 14 gebildet. Die erste Reibfläche kann selbstverständlich auch an dem Antriebsaufsatz 4 ausgebildet sein, sofern die Öffnung in der Abdeckung derart gestaltet ist, dass die erste Reibfläche 15 mit der zweiten, im Arbeitsraum befindlichen Reibfläche 17 zusammenzuwirken vermag, insbesondere in den Arbeitsraum hineinragt.

Die erste Reibfläche 15 und/oder die zweite Reibfläche 17 müssen nicht notwendiger Weise durch einen Bremsring gebildet sein. Je nach Art der Materialpaarung von Funktionseinsatz und Abdeckung bzw. Antriebseinheit kann auch auf ein gesondertes, die Reibfläche bildendes Bauteil verzichtet werden. Außerdem kann am Funktionseinsatz und/oder an der Abdeckung bzw. an der Antriebseinheit anstelle eines gesonderten Bauteils nach Art eines Bremsrings auch eine Beschichtung oder eine im Mehrkomponentenspritzgussverfahren angespritzte Reibfläche vorgesehen sein. Außerdem ist es nicht notwendiger Weise erforderlich, dass beide Reibflächen von einer ringförmigen Fläche gebildet sind. Zumindest eine Reibfläche kann auch durch einzelne, bevorzugt gleichmäßig um die Drehachse angeordnete Flächenabschnitte gebildet sein.

Die Verlagerung oder Absenkung der Abdeckung und/oder der Antriebseinheit gegenüber dem Funktionseinsatz kann darüber hinaus auch durch ein gezieltes Verkippen der Antriebseinheit gegenüber der Abdeckung erzielt werden. In diesem Fall wird die erste Reibfläche aus Ihrer gegenüber der zweiten Reibfläche parallelen Ausrichtung gebracht und kommt so mit einem gewissen Anteil Ihres Umfangs mit der zweiten Reibfläche in Anlage. Die sich hieraus ergebende, leicht außermittige Belastung wirkt sich bei nah um die Drehachse herum angeordneten Reibflächen kaum aus und kann, obwohl gegenüber einer rein mittigen Belastung nachteilig, hingenommen werden. Weiter kann die Verlagerung oder Absenkung der Abdeckung und/oder der Antriebseinheit auch dadurch gewährleistet werden, dass die Abdeckung und/oder die Antriebseinheit auf einem elastischen Auflager aufsitzen. Ein solches Auflager kann insbesondere durch einen umlaufenden Dichtring aus Weichkunststoff, bevorzugt aus geschäumtem Weichkunststoff, gebildet sein. Die Härte dieses Auflagers ist dann in Analogie zur Auslegung des Verformungswiderstands der Abdeckung derart zu wählen, dass die Absenkung und/oder Verlagerung der Abdeckung bzw. das Absenken oder Verkippen der Antriebseinrichtung in Folge der Komprimierbarkeit des Auflagers erfolgt. Eine Kombination beider Maßnahmen, also der Verformbarkeit der Abdeckung und der Komprimierbarkeit eines Auflagers, ist ebenfalls möglich.

Insgesamt wird durch die beschriebenen Ausgestaltungen eine Vorrichtung zur Verarbeitung von Lebensmitteln mit einem über eine Bremseinrichtung abbremsbaren Funktionseinsatz geschaffen, die in vorteilhafter Weise einfach konzipiert und besonders unkompliziert handhabbar ist. Der Erfindung liegt die Erkenntnis zugrunde, dass dieses Ziel erreicht werden kann, indem man ohnehin vorgesehene Bauteile oder Baugruppen derart auslegt oder anordnet, dass daran vom Nutzer ausgeübte Tätigkeiten, die bei bestimmungsgemäßer Verwendung typischerweise nicht vorkommen, gezielt zur Implementierung einer zusätzlichen Funktion, hier der einer Bremsvorrichtung, eingesetzt werden können, denn weder das Absenken oder die Deformation einer Abdeckung noch das Niederdrücken einer Antriebsvorrichtung über ein bestimmtes Maß hinaus oder deren Verkippen sind Betätigungen, die ein Nutzer einer solchen Vorrichtung bei gewohnter Verwendung vornehmen würde. Genau solche Betätigungen werden jedoch gezielt eingesetzt.

Soweit die Figuren sich auf die Darstellung einer Salatschleuder beschränken, sei darauf hingewiesen, dass die Erfindung sich selbstverständlich nicht hierauf beschränkt und auch auf gleichartige Vorrichtungen zur Ver- oder Bearbeitung von Lebensmitteln Anwendung finden kann. So kann anstelle der Salatschleuder auch ein Funktionseinsatz in Form eines Häcksel-, Walk- oder sonstigen Funktionseinsatzes mit daran angeordneten Werkzeugen vorgesehen sein, die infolge der Antriebsbetätigungskraft in Drehung versetzt werden.

### Bezugszeichenliste

- 1: Salatschleuder
- 2: Schüssel
- 3: Deckel
- 4: Antriebsaufsatz
- 5: Antriebsstempel
- 6: Schleuderkorb
- 7: Feder
- 8: Spindel
- 9: Spindelmutter
- 10: Antriebswellenstumpf
- 11: Dom
- 12: Verschlusskappe
- 13: Rotationsdorn
- 14: erster Bremsring
- 15: erste Reibfläche
- 16: zweiter Bremsring
- 17: zweite Reibfläche

- D: Drehachse
- S: Spaltbreite

## Patentansprüche

1. Vorrichtung zur Verarbeitung von Lebensmitteln mit einem um eine Drehachse (D) drehbar gelagerten Funktionseinsatz (6), der bei bestimmungsgemäßen Gebrauch von einer Antriebseinrichtung (4) angetrieben ist, um innerhalb eines von einer Abdeckung (3) zumindest teilweise verdeckten Arbeitsraums zu rotieren, wobei eine Bremseinrichtung vorgesehen ist, durch deren Betätigung eine erste Reibfläche (15) gegen eine zweite Reibfläche (17) angestellt wird, um den Funktionseinsatz (6) im Anschluss an einen Arbeitsgang abzubremsen, **dadurch gekennzeichnet, dass** die Betätigung der Bremseinrichtung durch eine Verlagerung oder Deformation der Abdeckung (3) infolge des Niederdrückens der Antriebseinrichtung (4) oder infolge eines gezielten Verkippens der Antriebseinrichtung (4) gegenüber der Abdeckung (3) erfolgt.

2. Vorrichtung zur Verarbeitung von Lebensmitteln mit einem um eine Drehachse (D) drehbar gelagerten Funktionseinsatz (6), der bei bestimmungsgemäßen Gebrauch von einer Antriebseinrichtung (4) angetrieben ist, um innerhalb eines von einer Abdeckung (3) zumindest teilweise verdeckten Arbeitsraums zu rotieren, wobei eine Bremseinrichtung vorgesehen ist, durch deren Betätigung eine erste Reibfläche (15) gegen eine zweite Reibfläche (17) angestellt wird, um den Funktionseinsatz (6) im Anschluss an einen Arbeitsgang abzubremsen, **dadurch gekennzeichnet, dass** die Betätigung der Bremseinrichtung durch eine Verlagerung der Antriebseinheit (4) relativ zum Funktionseinsatz (6) infolge des Niederdrückens der Antriebseinrichtung (4) oder infolge eines gezielten Verkippens der Antriebseinrichtung (4) gegenüber der Abdeckung (3) erfolgt.

3. Vorrichtung nach den Ansprüchen 1 und 2.

4. Vorrichtung nach einem der drei vorhergehenden Ansprüche, **dadurch gekennzeichnet, dass** die Abdeckung (3) mittels eines deformierbaren Auflagers auf einem den Arbeitsraum bildenden Behältnis (2) aufsitzt.

5. Vorrichtung nach einem der vorhergehenden Ansprüche, **dadurch gekennzeichnet, dass** die Antriebseinrichtung (4) durch einen auf die Abdeckung (3) aufsetzbaren Antriebsaufsatz (4) gebildet ist, der mittels eines deformierbaren Auflagers auf der Abdeckung (3) aufsitzt.

6. Vorrichtung nach einem der vorhergehenden Ansprüche, **dadurch gekennzeichnet, dass** zur Betätigung der Bremsvorrichtung die Abdeckung (3) unter Ausnutzung der Materialelastizität der Abdeckung (3) zumindest abschnittsweise deformiert wird, um die beiden Reibflächen (15,17) zur Erzeugung der Bremskraft gegeneinander anzustellen.

7. Vorrichtung nach einem der vorhergehenden Ansprüche, **dadurch gekennzeichnet, dass** zur Betätigung der Bremsvorrichtung auf die Abdeckung (3) eine Bremsenbetätigungskraft ausgeübt wird, die zu einer zum Antrieb des Funktionseinsatzes (6) erforderlichen Antriebsbetätigungskraft gleichgerichtet ist, wobei die Bremsenbetätigungskraft größer als die Antriebsbetätigungskraft ist.

8. Vorrichtung nach einem der vorhergehenden Ansprüche, **dadurch gekennzeichnet, dass** der Funktionseinsatz (6) von einem Schleuderkorb (6) gebildet ist, der einen um die Drehachse (D) herum angeordneten Dom (11) aufweist, der an seiner der Abdeckung (3) zugewandten Stirnseite die zweite Reibfläche (17) aufweist.

9. Vorrichtung nach einem der vorhergehenden Ansprüche, **dadurch gekennzeichnet, dass** die erste Reibfläche (15) an der Abdeckung (3) ausgebildet ist.

10. Vorrichtung nach einem der Ansprüche 1 bis 8, **dadurch gekennzeichnet, dass** die erste Reibfläche (15) an der Antriebseinrichtung (4) ausgebildet ist.

11. Vorrichtung nach einem der vorhergehenden Ansprüche, **dadurch gekennzeichnet, dass** die erste Reibfläche (15) und/oder die zweite Reibfläche (17) die Oberfläche eines Weichkunststoffkörpers, insbesondere eines Bremsrings (14,16), ist.

12. Vorrichtung nach einem der vorhergehenden Ansprüche, **dadurch gekennzeichnet, dass** die erste Reibfläche (15) an der dem Arbeitsraum zugewandten Innenseite der Abdeckung (3) oder an der dem Arbeitsraum zugewandten Seite der auf die Abdeckung (3) bestimmungsgemäß aufgesetzten Antriebseinrichtung (4) angeordnet ist, wobei die zweite Reibfläche (17) an einer zentral angeordneten Stirnseite des Funktionseinsatzes (6) angeordnet ist, und wobei die erste Reibfläche (15) und die zweite Reibfläche (17) von der Drehachse (D) durchdrungen sind oder die Drehachse (D) unmittelbar umgeben und sich bei bestimmungsgemäßem Gebrauch unmittelbar gegenüberliegen.

## Claims

1. Apparatus for processing foodstuffs with a functional insert (6) mounted to be rotatable about a rotational axis (D), wherein said functional insert is driven by a driving device (4) when used properly to rotate inside a working chamber covered at least partly with a cover (3), wherein a braking device is provided such that, when it is activated, a first friction surface (15) is placed in engagement against a second friction surface (17) to bring the functional insert (6) to a stop at the end of a working process, **characterised in that** the activation of the braking device is brought about by a displacement or deformation of the cover (3) due to the depression of the driving device (4) or due to a deliberate tilting of the driving device (4) relative to the cover (3).

2. Apparatus for processing foodstuffs with a functional insert (6) mounted to be rotatable about a rotational axis (D), wherein said functional insert is driven by a driving device (4) when used properly to rotate inside a working chamber covered at least partly with a cover (3), wherein a braking device is provided such that, when it is activated, a first friction surface (15) is placed in engagement against a second friction surface (17) to bring the functional insert (6) to a stop at the end of a working process, **characterised in that** the activation of the braking device is brought about by a displacement of the driving device (4) relative to the functional insert (6) due to the depression of the driving device (4) or due to a deliberate tilting of the driving device (4) relative to the cover (3).

3. Apparatus according to claims 1 and 2.

4. Apparatus according to any one of the three preceding claims, **characterised in that** the cover (3) rests, by means of a deformable support, on a container (2) forming the working chamber.

5. Apparatus according to any one of the preceding claims, **characterised in that** the driving device (4) is formed by a driving attachment (4) which can be placed on the cover (3), wherein said driving attachment rests, by means of a deformable support, on the cover (3).

6. Apparatus according to any one of the preceding claims, **characterised in that**, to activate the braking device, the cover (3) is deformed exploiting the elasticity of the material of the cover (3) at least in sections, in order to bring the two friction surfaces (15,17) together to generate the braking force.

7. Apparatus according to any one of the preceding claims, **characterised in that**, to activate the braking device, a braking activating force is exerted on the cover (3), wherein said force is adjusted in relation to the drive activating force needed to drive the functional insert (6), wherein the braking activating force is greater than the drive activating force.

8. Apparatus according to any one of the preceding claims, **characterised in that** the functional insert (6) is formed by a spinning basket (6) having a dome (11) arranged around the rotational axis (D), said dome having the second friction surface (17) on its front side facing towards the cover (3).

9. Apparatus according to any one of the preceding claims, **characterised in that** the first friction surface (15) is formed on the cover (3).

10. Apparatus according to any one of the claims 1 to 8, **characterised in that** the first friction surface (15) is formed on the driving device (4).

11. Apparatus according to any one of the preceding claims, **characterised in that** the first friction surface (15) and/or the second friction surface (17) are/is the upper surface of a soft plastic body, in particular a brake ring (14,16).

12. Apparatus according to any one of the preceding claims, **characterised in that** the first friction surface (15) is arranged on the inner side of the cover (3) facing towards the working chamber or on the side of the driving device (4) correctly placed on the cover (3) and facing towards the working chamber, wherein the second friction surface (17) is arranged on a centrally arranged front side of the functional insert (6), and wherein the first friction surface (15) and the second friction surface (17) are penetrated by the rotational axis (D) or encircle the rotational axis (D) directly and are directly opposite each other when used properly.

## Revendications

1. Dispositif de traitement d'aliments doté d'un insert fonctionnel (6) monté de façon à pouvoir pivoter autour d'un axe de rotation (D), ledit insert fonctionnel est entraîné par un dispositif d'entraînement (4) lors d'un usage conforme afin de pivoter autour d'un espace de travail recouvert au moins partiellement par un revêtement (3), un dispositif de freinage étant prévu dont l'actionnement règle une première surface de frottement (15) contre une deuxième surface de frottement (17) afin de freiner l'insert fonctionnel (6) après une opération, **caractérisé en ce que**
l'actionnement du dispositif de freinage a lieu par un déplacement ou une déformation du revêtement (3) suite à l'enfoncement du dispositif d'entraînement (4) ou suite à un renversement ciblé du dispositif d'entraînement (4) par rapport au revêtement (3).

2. Dispositif de traitement d'aliments doté d'un insert fonctionnel (6) monté de façon à pouvoir pivoter autour d'un axe de rotation (D), ledit insert fonctionnel est entraîné par un dispositif d'entraînement (4) lors d'un usage conforme afin de pivoter autour d'un espace de travail recouvert au moins partiellement par un revêtement (3), un dispositif de freinage étant prévu dont l'actionnement règle une première surface de frottement (15) contre une deuxième surface de frottement (17) afin de freiner l'insert fonctionnel (6) après une opération, **caractérisé en ce que**
l'actionnement du dispositif de freinage a lieu par un déplacement de l'unité d'entraînement (4) par rapport à l'insert fonctionnel (6) suite à l'enfoncement du dispositif d'entraînement (4) ou suite à un renversement ciblé du dispositif d'entraînement (4) par rapport au revêtement (3).

3. Dispositif selon les revendications 1 et 2.

4. Dispositif selon l'une des trois revendications précédentes, **caractérisé en ce que** le revêtement (3) est disposé sur un récipient (2) formant l'espace de travail à l'aide d'un support déformable.

5. Dispositif selon l'une des revendications précédentes, **caractérisé en ce que** le dispositif d'entraînement (4) est formé par un dispositif supplémentaire d'entraînement (4) pouvant être reposé sur le revêtement (3), ledit dispositif supplémentaire d'entraînement repose sur le revêtement (3) à l'aide d'un support déformable.

6. Dispositif selon l'une des revendications précédentes, **caractérisé en ce que** le revêtement (3) est déformé au moins par étapes pour actionner le dispositif de freinage en utilisant l'élasticité du matériau du revêtement (3) afin de régler les deux surfaces de frottement (15, 17) l'une contre l'autre pour générer la force de freinage.

7. Dispositif selon l'une des revendications précédentes, **caractérisé en ce qu'**une force d'actionnement du frein est exercée sur le revêtement (3) pour actionner le dispositif de freinage, ladite force d'actionnement du frein est redressée en vue d'une force d'actionnement d'entraînement nécessaire à l'entraînement de l'insert fonctionnel (6), la force d'actionnement du frein étant supérieure à la force d'actionnement d'entraînement.

8. Dispositif selon l'une des revendications précédentes, **caractérisé en ce que** l'insert fonctionnel (6) est formé par un panier centrifuge (6) qui présente un dôme (11) disposé autour de l'axe de rotation (D), ledit dôme (11) présente la deuxième surface de frottement (17) sur sa face avant orientée vers le revêtement (3).

9. Dispositif selon l'une des revendications précédentes, **caractérisé en ce que** la première surface de frottement (15) est formée sur le revêtement (3).

10. Dispositif selon l'une des revendications 1 à 8, **caractérisé en ce que** la première surface de frottement (15) est formée sur le dispositif d'entraînement (4).

11. Dispositif selon l'une des revendications précédentes, **caractérisé en ce que** la première surface de frottement (15) et/ou la deuxième surface de frottement (17) est(sont) la surface d'un corps en plastique mou, notamment d'une plaque de freinage (14, 16).

12. Dispositif selon l'une des revendications précédentes, **caractérisé en ce que** la première surface de frottement (15) est disposée coté intérieur orienté vers l'espace de travail du revêtement (3) ou côté orienté vers l'espace de travail du dispositif d'entraînement (4) reposé conformément sur le revêtement (3), la deuxième surface de frottement (17) étant disposée sur une face avant médiane de l'insert fonctionnel (6), et la première surface de frottement (15) ainsi que la deuxième surface de frottement (17) étant pénétrées par l'axe de rotation (D) ou contournant directement l'axe de rotation (D) et étant en face l'une de l'autre lors d'un usage conforme.
